# EUROPEAN PATENT SPECIFICATION

(11) **EP 4 218 954 B1**
(45) Date of publication and mention of the grant of the patent: **01.04.2026**
(21) Application number: 22154064.4
(22) Date of filing: 28.01.2022
(51) Int. Cl.: A62C 13/76, A62C 13/66, F16B 21/10

(54) **HOSE CONNECTOR FOR A FIRE EXTINGUISHER**
SCHLAUCHANSCHLUSS FÜR EINEN FEUERLÖSCHER
CONNECTEUR DE TUYAU POUR UN EXTINCTUIR D'INCENDIE

(43) Date of publication of application: 02.08.2023
(73) Proprietor: Carrier Corporation, Palm Beach Gardens, FL 33418 (US)
(72) Inventor: WIECZERZAK, Wieslaw, 39-304 Czermin (PL)
(74) Representative: Dehns

(56) References cited:
- EP-A1- 0 965 364
- EP-A1- 1 393 779
- DE-A1- 2 620 909
- JP-B2- 5 140 547

## Description

The present disclosure relates to cartridge-operated fire extinguishers, particularly to a hose connector and a valve body for a cartridge-operated fire extinguisher, and a method for assembling a cartridge-operated fire extinguisher.

The regular inspection and maintenance, i.e. servicing, of fire extinguishers is important to ensure that fire extinguishers remain operational and safe to use.

There are different types of fire extinguishers such as stored pressure fire extinguishers and cartridge-operated fire extinguishers.

Cartridge-operated fire extinguishers typically have a configuration in which a fire suppressant (e.g. water or dry powder) is stored in an unpressurised cylinder and a propellant is stored under pressure in a separate sealed cartridge within the cylinder. The top of the cylinder is sealed with a valve body that also holds the cartridge. Activation of a cartridge-operated fire extinguisher first requires piercing of the pressurised cartridge. Piercing of the pressurised cartridge releases the propellant into the unpressurised cylinder through the valve body and forces the fire suppressant out of the cylinder through the valve body and into a hose coupled to the valve body. The hose can then be aimed by a user at a fire.

Cartridge-operated fire extinguishers are often used in industrial environments such as in construction and heavy equipment industries due to their heavy duty, robust design. However, the robust design of such fire extinguishers often means that cartridge-operated fire extinguishers are heavy.

Typically, the hose is coupled to the valve body by a threaded connection and is attached to the valve body of the fire extinguisher by being screwed in to a corresponding threaded opening of the valve body. To remove a hose connector for inspection and maintenance of the fire extinguisher, specialist tools are required. Further, there is a risk that, when the hose is reattached to the cylinder, cross-threading can occur. This can mean that servicing of a cartridge-operated fire extinguisher can be an overly complex or lengthy process and/or safety may be compromised.

JP 5 140547 B2 discloses a fire extinguisher hose connector wherein a restraining member is inserted to engage with a groove part of the hose.

DE 26 20 909 A1 discloses an extinguishing hose mounted on a right-angled coupling piece, which attaches to an extinguisher with a threaded connector.

There is a desire to simplify the inspection and maintenance process of cartridge-operated fire extinguishers while maintaining appropriate safety standards.

According to a first aspect, the present invention provides a hose connector for a cartridge-operated fire extinguisher, the hose connector comprising: a valve body connection tube for connecting the hose connector to a valve body of the fire extinguisher, wherein the valve body connection tube is non-threaded; a hose connection tube for connecting a hose to the hose connector; and a fixing plate for fixing the hose connector to the valve body of the fire extinguisher.

The hose connector may be for mounting on a valve body of a cartridge-operated fire extinguisher. The valve body may be patentable in its own right.

Thus, according to a second aspect, the present invention provides a valve body for a cartridge-operated fire extinguisher, the valve body comprising: a hose connector support surface for supporting a fixing plate of a hose connector; and a non-threaded hose connector receiving hole within in the hose connector support surface for receiving the valve body connection tube of the hose connector, wherein the hose connector is according to the first aspect, optionally, with any optional features thereof.

The hose connector may be mounted on the valve body. The valve body may be mounted on a cylinder to provide a cartridge-operated fire extinguisher.

Thus, according to a third aspect, the present invention provides a cartridge-operated fire extinguisher, the fire extinguisher comprising: the hose connector of the first aspect; the valve body of the second aspect; and a cylinder with an opening at the top of the cylinder, wherein the valve body is fixed to the cylinder to seal i.e. close, the opening at the top, and the hose connector is mounted on the valve body such that the fixing plate of the hose connector is supported on the hose connector support surface of the valve body and the valve body connection tube of the hose connector is received in the hose connector receiving hole of the valve body.

The cartridge-operated fire extinguisher may comprise a hose. The hose may be connected to the hose connection tube of the hose connector.

A cartridge-operated fire extinguisher may comprise one or more of a cylinder, a valve body, a cartridge, a hose connector, a cartridge piercer, and/or a hose. The valve body may be mounted to the top of the cylinder. The cylinder may house fire suppressant. The cartridge may contain a propellant stored under pressure. The cartridge may be housed within the cylinder. The cartridge piercer may be for piercing the cartridge to release the propellant contained therein. When the fire extinguisher is assembled the valve body may be connected to the cartridge. When the valve body is mounted on the cylinder, the cartridge may be held within the cylinder by the valve body. The hose connector may be mounted on the valve body. The hose connector may be used to couple the hose to the valve body. The valve body may support the cartridge piercer.

The fire extinguisher may be arranged so that when the fire extinguisher is operated, the cartridge is pierced by the cartridge piercer. After the cartridge is pierced by the cartridge piercer, the propellant may be released from the cartridge such that the fire suppressant stored in the cylinder is expelled from the cylinder. Specifically, once the cartridge has been pierced, the propellant may flow from the cartridge though the valve body, through a channel, and into the cylinder. This may force the fire suppressant (e.g. powder or water) out of the cylinder, though the valve body, through the hose connected and into the hose, from where it can be directed at a fire. Thus, the fire suppressant may be expelled via the valve body, the hose connector, and the hose.

Fire suppressants used in cartridge-operated fire extinguishers may include dry powder, water, foam, or any other suitable fire suppressant.

An advantage of the hose connector is that, because the hose connector is not connected to the fire extinguisher using a threaded connection, i.e. the valve body connection tube of the hose connector is not threaded and the hose connector receiving hole is non-threaded, there is no possibility of cross-threading occurring when connecting the hose connector to the valve body, thereby improving safety. The hose connector may be used to quickly and/or reliably couple a hose to the fire extinguisher. This may be done without any specialist tools. Another advantage of the hose connector is that, in use, the stress distribution of the hose connector may be improved. This is due to the use of a non-threaded connection and/or use of the fixing plate.

An additional advantage is that, by using a fixing plate to secure the hose connector to the valve body of the cartridge-operated fire extinguisher, the inspection and maintenance process may be simplified, faster, and/or made foolproof. This is because the valve body and/or hose connector may be arranged to connect together in only one orientation. A faster and simpler maintenance and inspection process may reduce costs for operators.

The hose connector and/or valve body may be plastic. The plastic may be polyamide.

An advantage of the hose body and/or valve body being plastic is that it may be cheaper, lighter, and more resistant to aggressive fire suppressant agents than metal hose connectors and/or metal valve bodies. Further, plastic may be more resistant to environmental damage and stresses due to temperature fluctuations that may be experienced by a fire extinguisher.

The fixing plate may comprise a first side and a second side opposite to the first side. The fixing plate may comprise a fixing plate plane.

The fixing plate may comprise an aperture for receiving a shaft of a bolt. The aperture may be a hole, slot, or opening. The aperture may have an aperture axis that is perpendicular to the fixing plate plane.

The hose connection tube of the hose connector may extend from the first side of the fixing plate in a direction perpendicular to the fixing plate plane.

The valve body connection tube of the hose connector may extend from the second side of the fixing plate in a direction perpendicular to the fixing plate plane.

The hose connector may be a single piece component, i.e. the valve body connection tube, fixing plate and hose connection tube may be integrally formed. The hose connector may be a single injection moulded component.

An opening may extend through the valve body connection tube, the fixing plate, and the hose connection tube. The opening may form a tube for fluidly connecting a valve body of the fire extinguisher to a hose of the fire extinguisher. Thus this opening may be for the passage of fire suppressant from the cylinder to the hose when the fire extinguisher is activated.

The hose connection tube may have an internal cross-sectional shape of a circle, a square, an oval or any other suitable shape. The hose connection tube may have an external cross-sectional shape of a circle, a square, an oval or any other suitable shape. The internal cross-sectional shape and the external cross-sectional shape of the hose connection tube may be different or they may be the same.

The valve body connection tube may have an internal cross-sectional shape of a circle, a square, an oval or any other suitable shape. The valve body connection tube may have an external cross-sectional shape of a circle, a square, an oval or any other suitable shape. The internal cross-sectional shape and the external cross-sectional shape of the valve body connection tube may be different or they may be the same. The internal and/or external cross-sectional shape of the hose connection tube and the valve body connection tube may be different or they may be the same. The internal cross-sectional surfaces of the hose connection tube and the valve body connection tube may form a continuous surface. That is, the hose connection tube and the valve body connection tube may be integrally formed to form a single tube for fluidly connecting the valve body to the hose.

The valve body connection tube may be configured to be push-fit into a corresponding opening (i.e. the hose connector receiving hole) in the valve body. That is, the valve body connection tube may be a push-fit connector. The valve body connection tube may comprise a seal, such as an O-ring, around its external surface. This seal may provide a sealed connection between the valve body and hose connector when the valve body connection tube is inserted into the hose connector receiving hole. An advantage of using an O-ring in a push-fit connector may be that they can provide a secure friction fit and provide a fluid seal.

The hose connector receiving hole may comprise one or more, e.g. three, groove(s) on its inner surface. The groove(s) may extend longitudinally along the inner surface of the hose connector receiving hole, i.e. not circumferentially. The groove(s) may extend in a direction parallel to the axis of the hole. The groove(s) may allow pressure within the fire extinguisher to be released as the hose connector is removed but before it is fully released from the valve body. This is a safety feature to prevent the hose connector being forced out of the hose connector receiving hole if the cylinder is pressurised. An advantage of fixing the hose connector to the valve body by a bolt and nut arrangement is that it may be possible for the fixing to be loosened to allow the hose connector to come slightly out of the hose connector receiving hole whilst still keeping the hose connector attached to the valve body. Thus, if the fixing holding the hose connector is undone whilst the cylinder is pressurised, the groove(s) may allow the pressure to be safely released whilst the hose connector is still attached using the bolt and nut fixing.

The hose connection tube may comprise one or more annular protrusions on the external surface of the hose connection tube. The annular protrusions may be for securing a hose of the fire extinguisher to the hose connection tube.

When assembling the fire extinguisher, the hose, e.g. a rubber hose, may be pushed onto the hose connection tube, e.g. over the one or more annular protrusions. The hose may then be clamped in place on the hose connection tube. This may provide a sealed connection between the hose and the hose connector.

The fixing plate may comprise one or more reinforcing ribs. A reinforcing rib may be a portion of the fixing plate that is thicker than other portions of the fixing plate (e.g. thicker in a direction perpendicular to the fixing plate plane). An advantage of providing reinforcing ribs may be that the reinforcing ribs result in the fixing plate being strong and rigid as required whilst the remainder of the plate does not need to be as thick. This may allow the fixing plate to be lighter and manufactured more easily and/or cheaply. The reinforcing ribs may be provided on the first and/or second side of the fixing plate.

A reinforcing rib may surround the aperture, i.e. circumscribe the circumference of the aperture. This may be on one or both of the first and second sides of the fixing plate.

A reinforcing rib may surround the hose connection tube and/or the valve body connection tube, e.g. circumscribe the circumference of the hose connection tube and/or valve body connection tube. One or more reinforcing ribs may extend along the fixing plate between the aperture and the hose connection tube on the first side and/or along the fixing plate between the aperture and the valve body connection tube. The reinforcing ribs may be provided in locations of the hose connector subject to higher stresses.

The valve body, e.g. the hose connector support surface, may comprise depressions for receiving the reinforcing ribs on the second side of the hose connector. This may mean that the interface may be tight and reliable between the valve body and the hose connector. It may mean that once the hose connector is mounted on the valve body the two components cannot move relative to each other. This additionally or alternatively may mean the hose connector can only be fit onto the valve body in one orientation.

The hose connector support surface may have a support surface plane. The support surface plane may be at an angle relative to a plane perpendicular to a main axis through the valve body. When the valve body is mounted on the cylinder of the fire extinguisher, the main axis of the valve body may be parallel to a cylinder main axis. The cylinder main axis may extend in the longitudinal direction of the fire extinguisher. The opening of the cylinder may be centred on the cylinder main axis.

The hose connector support surface may comprise a fixing point. The fixing point may be for fixing the valve body to a cylinder of the fire extinguisher. The fixing point may comprise an aperture for receiving a shaft of a bolt. The aperture may be a hole, slot, or opening.

The cylinder comprises three bolts for fixing the valve body to the cylinder. Whilst the cylinder may comprise more than three bolts, the cylinder may consist of three bolts (i.e. only have three bolts), for fixing the valve body to the cylinder. One or more of these bolts may additionally be used to fix other components, such as a hose connector, to the valve body and/or cylinder. For example, the third, angled bolt may be used to fix a hose connector to the cylinder. This may be in a location on top of the valve body. The valve body, e.g. upper surface of the core of the valve body, may comprise a support surface for a hose connector. The support surface may be closer to the third bolt than the first and second bolt. For example, the bolt with a shaft axis oriented at an angle relative to the first shaft axis and the second shaft axis may be used to also secure a hose connector to the valve body and hence the cylinder.

The first bolt may comprise a first shaft. The first shaft may comprise a first shaft axis. The second bolt may comprise a second shaft. The second shaft may comprise a second shaft axis. The third bolt may comprise a third shaft. The third shaft may comprise a third shaft axis. The first shaft axis and the second shaft axis may be parallel to one another, and may also be parallel to the longitudinal axis of the cylinder. The third shaft axis may be at an angle relative to the first shaft axis, and therefore at the same angle relative to the second shaft axis and the longitudinal axis.

The third bolt may be for fixing the hose connector and/or the valve body to the cylinder. The third bolt of the cylinder may pass through an aperture of the valve body and an aperture of the hose connector. Thus the third bolt may have a dual function of being used to secure both the valve body and the hose connector. The hose connector and valve body may then be secured to the cylinder by a single/common nut.

As mentioned above, the third bolt may have a third shaft and a third shaft axis. The third shaft axis of the fixing bolt may be angled relative to the cylinder main axis. The third shaft axis may be angled about 10° to 50°, e.g. at about 30° or 45°, relative to the cylinder main axis. When the fire extinguisher is assembled, the support surface plane and/or fixing plate may be angled at about 10 to 50°, e.g. about 30 or about 45°, relative to the longitudinal axis of the cylinder. The hose connector and valve body may be arranged so that when the fire extinguisher is assembled the hose connection tube extends at an angle of about 10° to 50°, e.g. at about 30° or 45°, relative to the longitudinal axis of the cylinder. Thus when the fire extinguisher is assembled, the end of the hose connected to the hose connector may extend at angle of about 10° to 50°, e.g. at about 30° or 45°, relative to the longitudinal axis of the cylinder.

According to a fourth aspect, the present invention provides a method of assembling the cartridge-operated fire extinguisher of the third aspect, the method comprising: mounting the valve body on the cylinder; connecting the hose connector to the valve body by pushing the valve body connection tube into the hose connector receiving hole such that the fixing plate of the hose connector is supported on the hose connector support surface of the valve body; and fixing the valve body and the hose connector to the cylinder.

The hose connector may be connected to the valve body before or after the valve body is mounted on the cylinder.

The hose connector may be the hose connector of the first aspect and comprise any of the optional features thereof.

The valve body may be the valve body of the second aspect and comprise any of the optional features thereof.

The fixing step may comprise fixing the hose connector and the valve body to the cylinder with a nut. This may be a single and/or common nut. That is (as described above for example), the cylinder may comprise a bolt. The bolt may be the third bolt of the cylinder described above. The mounting of the valve body may comprise the bolt on the cylinder passing through an aperture of a fixing point of the valve body. The mounting of the hose connector on the valve body may comprise the bolt on the cylinder passing through an aperture of the fixing point of the valve body. Thus the same bolt may pass though both the valve body and the hose connector. This may allow the valve body and the hose connector to be secured to the cylinder with a common nut. This may facilitate a quicker assembly and/or disassembly of the fire extinguisher.

The cartridge-operated fire extinguisher may be provided as a kit of parts, i.e. a collection of not assembled components. That is, another aspect of the invention may provide a kit of parts for a cartridge-operated fire extinguisher, in particular for providing a cartridge-operated fire extinguisher as described above in relation to the third aspect, the kit comprising a hose connector, a valve body, and a cylinder. The hose connector may comprise the features of the hose connector of the first aspect or optional features thereof. The valve body may comprise the features of the valve body of the second aspect or optional features thereof. The kit of parts may be assembled by the method of the fourth aspect.

Certain embodiments of the invention will now be described by way of example only and with reference to the accompanying drawings in which:
Figure 1 illustrates a fire extinguisher;
Figure 2 illustrates a cross section of the fire extinguisher of Figure 1;
Figure 3 illustrates a cylinder of the fire extinguisher of Figure 1;
Figures 4a and 4b illustrate a valve body of the fire extinguisher of Figure 1;
Figures 5a, 5b, and 5c illustrate a hose connector of the fire extinguisher of Figure 1;
Figures 6a-d illustrate a fire extinguisher comprising a hose connector, a valve body, and a cylinder.

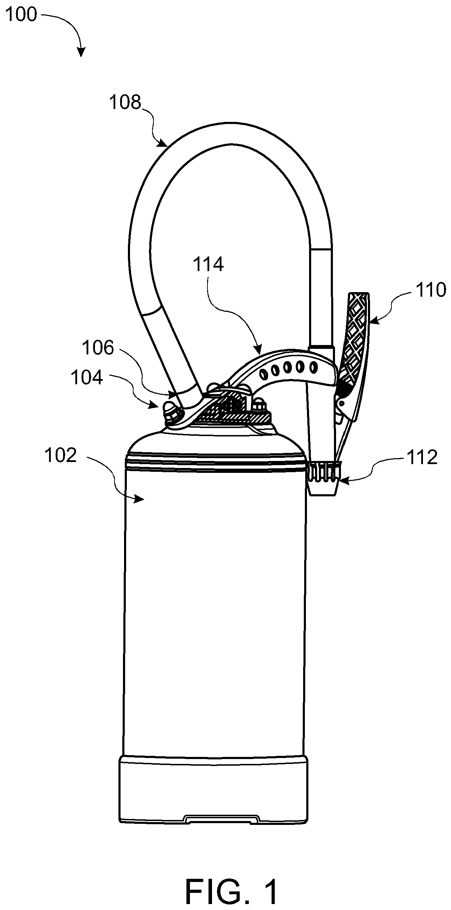

Figure 1 shows a cartridge-operated fire extinguisher 100. The fire extinguisher comprises a cylinder 102, a valve body 104, a hose connector 106, and a hose 108. The valve body 104 is mounted on the top of the cylinder 102. The hose connector 106 is connected to the valve body 104, and the hose 108 is connected to the hose connector 106. In this way, the hose 108 is fluidly connected to an internal space within the cylinder 102.

The hose 108 comprises a handle 110 and a nozzle 112. A lever 114 is connected to the valve body 104. When the fire extinguisher 100 is not in use, the hose 108 may be mounted on to the lever 114 in a storage position.

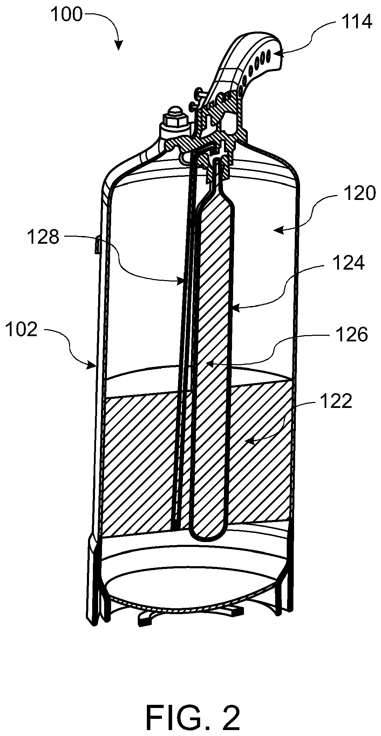

Figure 2 shows a cross-sectional image of the cartridge-operated fire extinguisher 100 of Figure 1.

As mentioned above, the cylinder 102 comprises an internal space 120. The internal space comprises a fire suppressant 122. The fire suppressant 122 may be dry powder, water or any other suitable fire suppressant.

The internal space also comprises a cartridge 124, wherein the cartridge 124 is connected to the valve body 104. The cartridge 124 comprises a propellant 126 stored under pressure.

The valve body 104 houses a cartridge piercer. The cartridge piercer is configured to pierce the cartridge 124 when the lever 114 is operated by a user in order to activate the fire extinguisher 100. When the cartridge 124 is pierced, the propellant 126 is released through the valve body 104 into a blow tube 128 and then into the internal space 120 of the cylinder 102. The blow tube 128 is configured to direct the propellant 126 in a manner that forces the fire suppressant back out the valve body 104, the hose connector 106, and through the hose 108. The nozzle 112 of the hose 108 may then be directed by a user towards a fire for extinguishing the fire and opened using the handle 110.

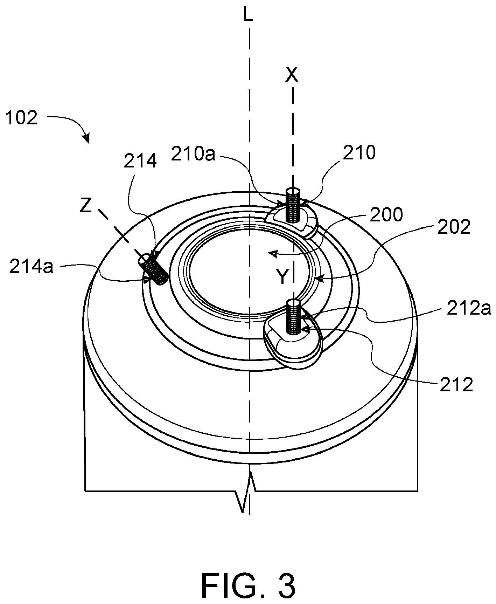

Figure 3 illustrates a perspective view of the top part of the cylinder 102. The cylinder 102 comprises an opening 200 at the top of the cylinder 102, where the opening 200 is circular and the centre of the opening 200 is centred on a longitudinal axis L of the cylinder 102. The opening 200 has a perimeter 202. The top portion around the perimeter 202 of the opening 200 is raised upwards such that a raised portion is formed.

The cylinder 102 comprises a first bolt 210, a second bolt 212, and a third bolt 214. The bolts 210, 212, 214 are positioned on the top cylinder 102 and radially outside of the perimeter 202 of the opening 200. The first bolt 210 comprises a first shaft 210a. The first shaft 210a comprises a first shaft axis X. The second bolt 212 comprises a second shaft 212a. The second shaft 212a comprises a second shaft axis Y. The third bolt 214 comprises a third shaft 214a. The third shaft 214a comprises a third shaft axis Z.

The first shaft axis X and the second shaft axis Y are parallel to one another, and are also parallel to the longitudinal axis L of the cylinder 102. The third shaft axis Z is at an angle, e.g. an angle of 30°, relative to the first shaft axis X, and therefore at the same angle relative to the second shaft axis Y and the longitudinal axis L.

The bolts 210, 212, 214 are for fixing the valve body 104 to the cylinder 102. The bolts 210, 212, 214 in Figure 3 are spot welded to the cylinder 102.

The bolts 210, 212, 214 have an equal angular distribution about the longitudinal axis L. That is, the angle between the positions of each bolt 210, 212, 214 around the longitudinal axis L is 120°. Further, the radial distance for each bolt 210, 212, 214 from the longitudinal axis L is the same.

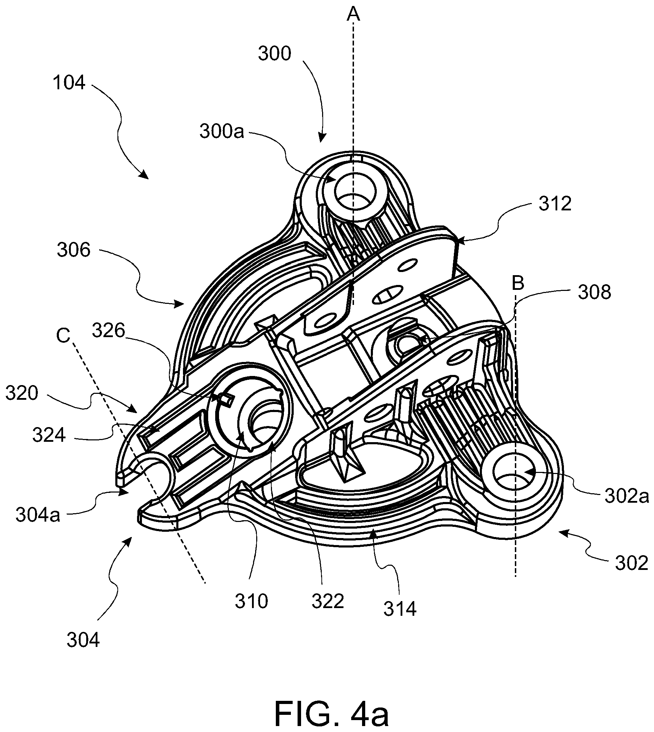

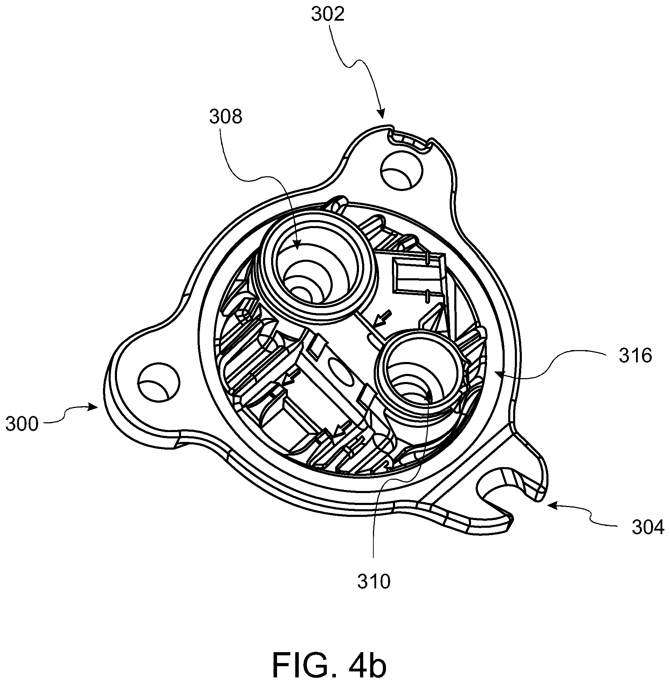

Figures 4a and 4b show perspective views of the valve body 104. Figure 4a shows a top side of the valve body 104, whereas Figure 4b shows an underside of the valve body 104. The underside of the valve body 104 is mounted on and faces towards the cylinder 102 when the cartridge-operated fire extinguisher 100 is assembled.

The valve body 104 comprises a first fixing point 300, a second fixing point 302, and a third fixing point 304. The first fixing point 300 comprises a first aperture 300a. The first aperture 300a comprises a first fixing point axis A centred through the first aperture 300a. The second fixing point 302 comprises a second aperture 302a. The second aperture comprises a second fixing point axis B centred through the second aperture 302a. The third fixing point 304 comprises a third aperture 304a. The third aperture 304a comprises a third fixing point axis C centred through the third aperture 304a.

The valve body comprises a core 306. The core 306 is circular in shape, i.e. it has a circular cross section. The fixing points 300, 302, 304 protrude radially from the core 306. The core 306 is for interfacing with the opening 200 of the cylinder 102. The fixing points 300, 302, 304 are integrally formed with the core 306. That is, the valve body 104 shown in Figures 4a and 4b is a single-piece component.

The first fixing point axis A and the second fixing point axis B are parallel. The third fixing point axis C is oriented at an angle, e.g. an angle of 30°, relative to the first fixing point axis A, and therefore at the same angle relative to the second fixing point axis B.

The first aperture 300a is for receiving the first shaft 210a of the first bolt 210 of the cylinder 102. The second aperture 302a is for receiving the second shaft 212a of the second bolt 212. The third aperture 304a is for receiving the third shaft 214a of the third bolt 214. The first aperture 300a and the second aperture 302a are through-holes in the first and second fixing points 300, 302, respectively. The third aperture 304a is a slot in the third fixing point 304.

The fixing points 300, 302, 304 are equally spaced around a perimeter of the core 306 of the valve body 104. That is, the fixing points 300, 302, 304 are positioned such that the fixing point axes A, B, C have an angle of 120° about an equidistant point between each axis.

The valve body 104 comprises a cartridge piercer opening 308 and a hose connector receiving hole 310. The cartridge piercer opening 308 and the hose connector receiving hole 310 are separate openings. The cartridge piercer opening 308 comprises an axis that is parallel to the first fixing point axis A and the second fixing point axis B. The hose connector receiving hole 310 comprises an axis that is parallel to the third fixing point axis C.

The valve body 104 comprises a support 312 for the lever 114. The support 312 is positioned between the first fixing point and the second fixing point 302.

As shown in Figure 4a, the top side of the core 306 comprises reinforcing ribs 314. The reinforcing ribs 314 are protrusions from the valve body 104 and are positioned along several locations such that they reinforce portions of the valve body 104 that experience high stresses when the cartridge-operated fire extinguisher 100 is in use. In the valve body 104 of Figure 4a, reinforcing ribs 314 are positioned proximate to the perimeter of the core 306 between the first fixing point 300 and the third fixing point 304, proximate to the perimeter of the core 306 between the second fixing point 302 and the third fixing point 304, between the first fixing point 300 and the support 312, and between the second fixing point 302 and the support 312.

The valve body 104 comprises a hose connector support surface 320 for supporting the hose connector 106. The hose connector support surface 320 is an angled surface that is perpendicular to the third fixing point axis C. That is, the hose connector support surface 320 comprises a support surface plane that is perpendicular to the third fixing point axis C. The support surface plane is at an angle, e.g. an angle of 30°, relative to a plane perpendicular to a main axis through the valve body. When the valve body is mounted on the cylinder of the fire extinguisher, the main axis of the valve body is parallel to the longitudinal axis L of the cylinder 102. The longitudinal axis L extends in the longitudinal direction of the fire extinguisher 100. The hose connector support surface 320 is an integrated portion of the valve body 104 that integrally connects the third fixing point 304 to the hose connector receiving hole 310.

The hose connector support surface 320 comprises a recessed portion 322. The recessed portion 322 is circular and circumscribes the hose connector receiving hole 310. The recessed portion 322 is for interfacing with a corresponding portion of the hose connector 106 and facilitates the forming of a seal between the hose connector 106 and the valve body 104 when the fire extinguisher 100 is assembled. Similarly, the hose connector support surface 320 comprises depressions 324 for receiving reinforcing ribs on a lower surface of the hose connector 106.

The hose connector receiving hole 310 is non-threaded. That is, there is no threading on the surface of the hose connector receiving hole 310.

The hose connector receiving hole 310 shown in Figure 4a comprises three grooves 326 on its inner surface. The grooves 326 extend longitudinally along the inner surface of the hose connector receiving hole 310. That is, the grooves 326 do not extend circumferentially along the inner surface of the hose connector receiving hole 310. The grooves 326 extend in a direction parallel to the axis of the hose connector receiving hole 310. The purpose of the grooves 326 is to allow any excess pressure within the fire extinguisher 100 to be released as the hose connector 106 is removed but before the hose connector 106 is fully released from the valve body 104. This is a safety feature to prevent the hose connector 106 being forced out of the hose connector receiving hole 310 if the cylinder is pressurised.

As shown in Figure 4b, the underside of the core 306 of the valve body 104 comprises embossing 316. The embossing 316 is circular and is proximate to the perimeter of the core 306. The embossing 316 is for interfacing with the raised portion of the perimeter 202 of the opening 200 of the cylinder 102.

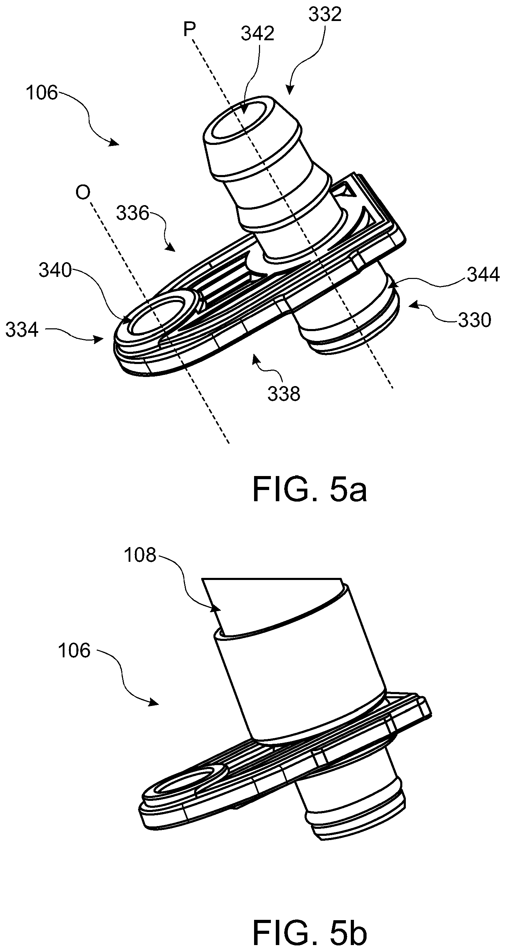

Figure 5a shows a perspective view of a hose connector 106 for the cartridge-operated fire extinguisher 100. The hose connector 106 comprises a valve body connection tube 330 for connecting the hose connector 106 to the valve body 104 of the fire extinguisher 100, a hose connection tube 332 for connecting a hose 108 to the hose connector 106, and a fixing plate 334 for fixing the hose connector 106 to the valve body 104 of the fire extinguisher 100. The valve body connection tube 330 is non-threaded.

The fixing plate 334 comprises a first side 336 and a second side 338, where the second side 338 is opposite to the first side 336. The fixing plate 334 comprises a fixing plate plane corresponding to the geometric plane of the fixing plate 334.

The fixing plate 334 comprises an aperture 340 for receiving a shaft of a bolt. As shown in Figure 5a, the aperture 340 is a hole. The hole 340 is non-threaded. The aperture 340 comprises an aperture axis O centred through the aperture 340, wherein the aperture axis O is perpendicular to the fixing plate plane.

The hose connection tube 332 of the hose connector 106 extends from the first side 336 of the fixing plate 334 in a direction perpendicular to the fixing plate plane.

The valve body connection tube 330 of the hose connector 106 extends from the second side 338 of the fixing plate 334 in a direction perpendicular to the fixing plate plane, and opposite to the direction that the hose connection tube 332 extends in. That is, the hose connection tube 332 and the valve body connection tube 330 extend in opposite directions from one another.

The hose connector 106, as shown in Figure 5a, is a single piece component, meaning that the valve body connection tube 330, fixing plate 334, and hose connection tube 332 are integrally formed.

An opening 342 extends through the valve body connection tube 330, the fixing plate 334, and the hose connection tube 332. The opening 342 forms a tube for fluidly connecting a valve body of the fire extinguisher to a hose of the fire extinguisher. Thus the opening 342 is for the passage of fire suppressant from the cylinder 102 to the hose 108 when the fire extinguisher 100 is activated by a user.

The hose connection tube 332 as shown in Figure 5a has a circular internal cross-sectional shape. The hose connection tube 332 has a circular external cross-sectional shape. The hose connector tube 332 also comprises annular protrusions on the outer surface for aiding in securing the hose 108 to the hose connector 106.

The valve body connection tube 330 has a circular internal cross-sectional shape. The valve body connection tube 330 has a circular external cross-sectional shape.

The internal surfaces of the hose connection tube 332 and the valve body connection tube 330 form a continuous surface. That is, the hose connection tube 332 and the valve body connection tube 330 are integrally formed to form a single tube for fluidly connecting the valve body 104 to the hose 108. The hose connection tube 332 and the valve body connection tube 330 have a common hose connector axis P centred through the hose connection tube 332 and the valve body connection tube 330. The hose connector axis P is parallel to the aperture axis O.

The valve body connection tube 330 is configured to be push-fit into a corresponding opening (i.e. the hose connector receiving hole 310) in the valve body 104. That is, the valve body connection tube 330 is a push-fit connector. The valve body connection tube comprises an O-ring 344 around its external surface. The O-ring 344 is for providing a sealed connection between the valve body 104 and hose connector 106 when the valve body connection tube 330 is inserted into the hose connector receiving hole 310.

Figure 5b shows a perspective view of the hose connector 106, wherein a hose 108 has been attached to the hose connection tube 332 of the hose connector 106.

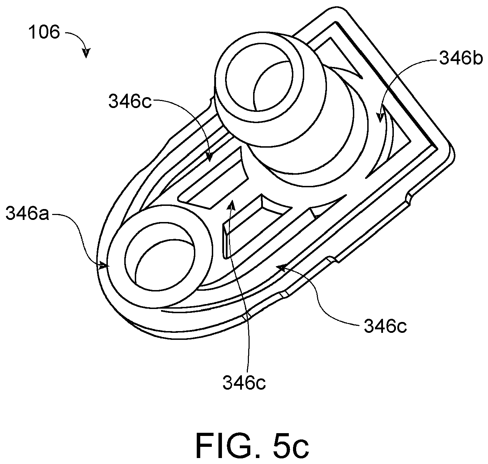

Figure 5c shows another perspective view of the hose connector 106. As shown in this Figure, the fixing plate 334 of the hose connector 106 comprises several reinforcing ribs 346. The reinforcing ribs are portions of the fixing plate 334 that protrude such that they are thicker than other portions of the fixing plate 334 (e.g. thicker in a direction perpendicular to the fixing plate plane).

A reinforcing rib 346a circumscribes the circumference of the aperture 340. The reinforcing rib 346a is shown in Figure 5c to be on the first side 336 of the fixing plate 334.

A reinforcing rib 346b circumscribes the circumference of the hose connection tube 332. A plurality of reinforcing ribs 346c extend along the fixing plate 334 between the aperture 340 and the hose connection tube 332 on the first side 336. Corresponding reinforcing ribs may be provided on the second side of the hose connector. The reinforcing ribs 346 are provided in locations of the hose connector 106 subject to higher stresses when in operation.

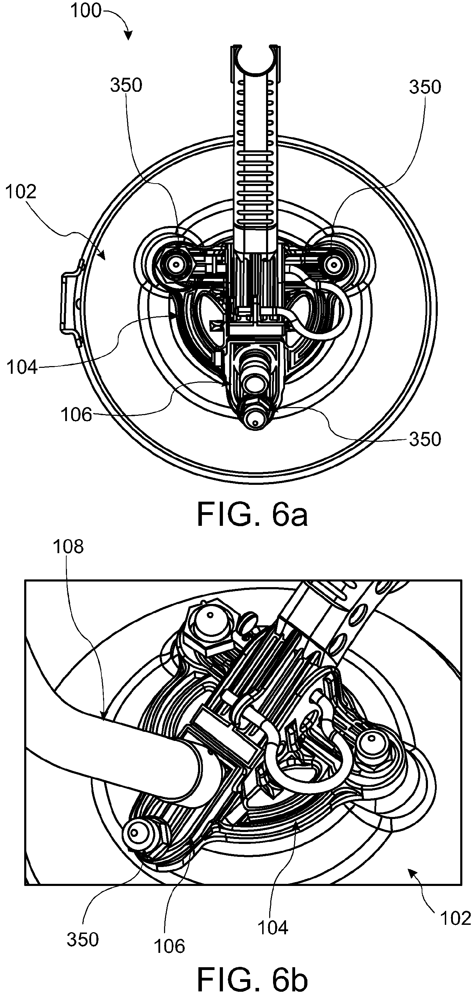

Figure 6a is a top-down view of the cartridge-operated fire extinguisher 100 of Figure 1. In this Figure, the valve body 104 is secured to the cylinder 102. To secure the valve body 104 to the cylinder 102, the valve body 104 is first mounted to the cylinder 102. In doing so, the valve body 102 covers the entirety of the opening 200 of the cylinder 102. The valve body 104 and the perimeter 202 of the opening 200 are configured such that, when the valve body 104 is mounted to the cylinder 102, a seal is formed between the valve body 104 and the cylinder 102. A perspective view of the valve body 104 is shown in Figure 6b.

To mount the valve body 104, the first shaft 210a of the first bolt 210 of the cylinder 102 passes through the first aperture 300a of the first fixing point 300 of the valve body 104. Likewise, the second shaft 212a of the second bolt 212 of the cylinder 102 passes through the second aperture 302a of the second fixing point 302 of the valve body 104, and the third shaft 214a of the third bolt 214 of the cylinder 102 passes through the third aperture 304a of the third fixing point 304 of the valve body 104. As the valve body 104 is mounted on the cylinder 102 each of the bolts 210, 212, 214 may pass through each respective aperture 300a, 302a, 304a simultaneously.

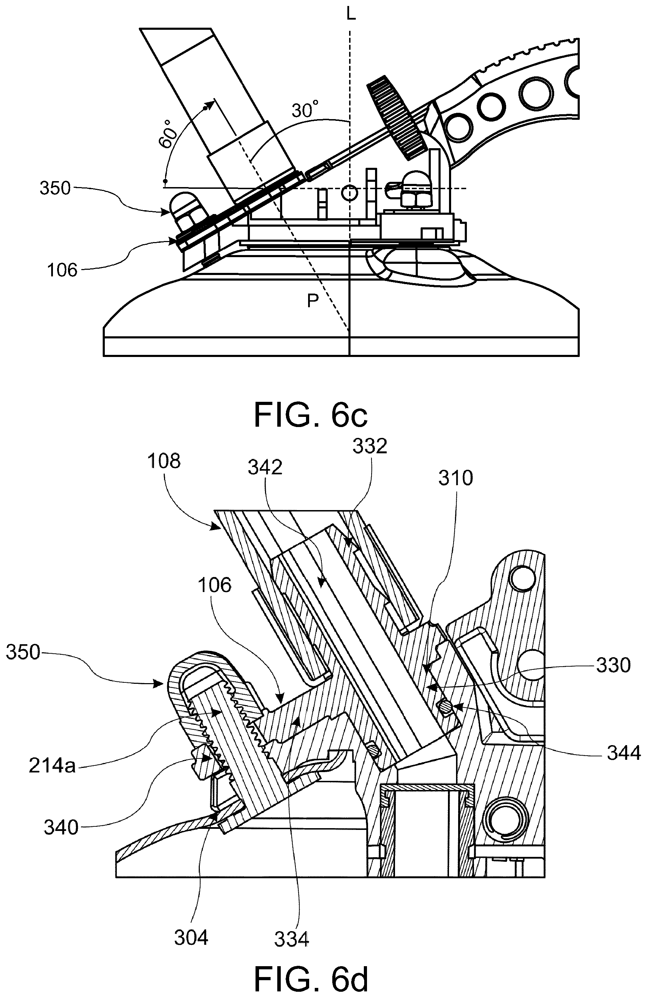

Figure 6d shows a cross-section of a portion of the fire extinguisher, and illustrates the connections between the cylinder 102, the valve body 104, the hose connector 106, and the hose 108. The hose connector 106 is mounted to the valve body 104 on the hose connector support surface 320. That is, the third shaft 214 passes through the third aperture 304a and the aperture 340 of the fixing plate 334 of the hose connector 106. The valve body connection tube 330 of the hose connector 106 is received in the hose connector opening 310 of the valve body 104.

Then, the valve body 104 and the hose connector 106 is secured to the cylinder 102. The valve body 104 as shown for example in Figures 4a and 4b is secured to the cylinder by the use of three nuts 350, one on each of the bolts 210, 212, 214. The hose connector 106 is secured to the valve body 104 by the nut 350 on the third bolt 214.

Figure 6c shows an arrangement of the assembled fire extinguisher 100 in which the hose connector axis P is at an angle of 30° relative to the longitudinal axis L of the cylinder 102.

## Claims

1. A hose connector (106) for a cartridge-operated fire extinguisher (100), the hose connector comprising:
a valve body connection tube (330) for connecting the hose connector to a valve body of the fire extinguisher, wherein the valve body connection tube is non-threaded;
a hose connection tube (332) for connecting a hose to the hose connector; and
a fixing plate (334) for fixing the hose connector to the valve body of the fire extinguisher.

2. The hose connector of claim 1, wherein the hose connector (106) is made of plastic.

3. The hose connector of claim 1 or 2, wherein the fixing plate (334) comprises an aperture (340).

4. The hose connector of claim 3, wherein the aperture (340) is non-threaded.

5. The hose connector of any preceding claim, wherein the hose connection tube (332) extends from a first side (336) of the fixing plate (334) and wherein the valve body connection tube (330) extends from a second side (338) of the fixing plate, wherein the second side is opposite to the first side.

6. The hose connector of claim 5, wherein the fixing plate (334) comprises a fixing plate plane, wherein hose connection tube (332) extends in a first direction perpendicular to the fixing plate plane, and wherein the valve body connection tube (330) extends in a second direction perpendicular to the fixing plate plane, wherein the second direction is opposite to the first direction.

7. The hose connector of any preceding claim, wherein an opening (342) extends through the valve body connection tube (330), the fixing plate (334), and the hose connection tube (332).

8. **The hose** connector of any preceding claim, wherein fixing plate (334) comprises one or more reinforcing ribs (346).

9. A valve body (104) for a cartridge-operated fire extinguisher (100), the valve body comprising:
a hose connector support surface (320) for supporting a fixing plate of a hose connector according to any of claims 1 to 8; and
a non-threaded hose connector receiving hole (310) within the hose connector support surface (320) for receiving a valve body connection tube of the hose connector.

10. The valve body of claim 9, wherein the valve body (104) is made of plastic.

11. The valve body of claim 9 or 10, wherein the hose connector support surface (320) comprises a fixing point (304), and wherein the fixing point comprises an aperture (304a).

12. A cartridge-operated fire extinguisher (100), the fire extinguisher comprising:
the hose connector (106) according to any of claims 1 to 8;
the valve body (104) according to any of claims 9 to 11; and
a cylinder (102) with an opening (200) at the top of the cylinder,
wherein the valve body is fixed to the cylinder to seal the opening at the top, and the hose connector is mounted on the valve body such that the fixing plate (334) of the hose connector is supported on the hose connector support surface (320) of the valve body and the valve body connection tube (330) of the hose connector is received in the hose connector receiving hole (310) of the valve body.

13. The cartridge-operated fire extinguisher of claim 12, wherein the cylinder comprises a fixing bolt (214), and wherein the fixing bolt passes through the hose connector (106) and the valve body (104).

14. A method of assembling the cartridge-operated fire extinguisher (100) of claim 12 or 13, the method comprising:
mounting the valve body (104) on the cylinder (102);
connecting the hose connector (106) to the valve body by pushing the valve body connection tube (330) into the hose connector receiving hole (310) such that the fixing plate (334) of the hose connector is supported on the hose connector support surface (320) of the valve body; and
fixing the valve body (104) and the hose connector (106) to the cylinder (102).

15. The method of claim 14, wherein the valve body (104) and the hose connector (106) are fixed to the cylinder by one or more nuts (350).

## Patentansprüche

1. Schlauchanschluss (106) für einen patronenbetriebenen Feuerlöscher (100), wobei der Schlauchanschluss Folgendes umfasst:
ein Ventilkörperverbindungsrohr (330) zum Verbinden des Schlauchanschlusses mit einem Ventilkörper des Feuerlöschers, wobei das Ventilkörperverbindungsrohr nicht gewindet ist;
ein Schlauchverbindungsrohr (332) zum Verbinden eines Schlauchs mit dem Schlauchanschluss; und
eine Befestigungsplatte (334) zum Befestigen des Schlauchanschlusses an dem Ventilkörper des Feuerlöschers.

2. Schlauchanschluss nach Anspruch 1, wobei der Schlauchanschluss (106) aus Kunststoff besteht.

3. Schlauchanschluss nach Anspruch 1 oder 2, wobei die Befestigungsplatte (334) eine Apertur (340) umfasst.

4. Schlauchanschluss nach Anspruch 3, wobei die Apertur (340) nicht gewindet ist.

5. Schlauchanschluss nach einem der vorhergehenden Ansprüche, wobei sich das Schlauchverbindungsrohr (332) von einer ersten Seite (336) der Befestigungsplatte (334) erstreckt und wobei sich das Ventilkörperverbindungsrohr (330) von einer zweiten Seite (338) der Befestigungsplatte erstreckt, wobei sich die zweite Seite der ersten Seite gegenüber befindet.

6. Schlauchanschluss nach Anspruch 5, wobei die Befestigungsplatte (334) eine Befestigungsplattenebene umfasst, wobei sich das Schlauchverbindungsrohr (332) in einer ersten Richtung senkrecht zu der Befestigungsplattenebene erstreckt, und wobei sich das Ventilkörperverbindungsrohr (330) in einer zweiten Richtung senkrecht zu der Befestigungsplattenebene erstreckt, wobei die zweite Richtung der ersten Richtung entgegengesetzt ist.

7. Schlauchanschluss nach einem der vorhergehenden Ansprüche, wobei sich eine Öffnung (342) durch das Ventilkörperverbindungsrohr (330), die Befestigungsplatte (334) und das Schlauchverbindungsrohr (332) erstreckt.

8. Schlauchanschluss nach einem der vorhergehenden Ansprüche, wobei die Befestigungsplatte (334) eine oder mehrere Verstärkungsrippen (346) umfasst.

9. Ventilkörper (104) für einen patronenbetriebenen Feuerlöscher (100), wobei der Ventilkörper Folgendes umfasst:
eine Schlauchanschluss-Auflagefläche (320) zum Abstützen einer Befestigungsplatte eines Schlauchanschlusses nach einem der Ansprüche 1 bis 8; und
ein nicht gewindetes Schlauchanschluss-Aufnahmeloch (310) innerhalb der Schlauchanschluss-Auflagefläche (320) zur Aufnahme eines Ventilkörperverbindungsrohrs des Schlauchanschlusses.

10. Ventilkörper nach Anspruch 9, wobei der Ventilkörper (104) aus Kunststoff besteht.

11. Ventilkörper nach Anspruch 9 oder 10, wobei die Schlauchanschluss-Auflagefläche (320) einen Befestigungspunkt (304) umfasst, und wobei der Befestigungspunkt eine Apertur (304a) umfasst.

12. Patronenbetriebener Feuerlöscher (100), wobei der Feuerlöscher Folgendes umfasst:
den Schlauchanschluss (106) nach einem der Ansprüche 1 bis 8;
den Ventilkörper (104) nach einem der Ansprüche 9 bis 11; und
einen Zylinder (102) mit einer Öffnung (200) oben an dem Zylinder,
wobei der Ventilkörper an dem Zylinder befestigt ist, um die Öffnung oben zu verschließen, und der Schlauchanschluss so an dem Ventilkörper montiert ist, dass die Befestigungsplatte (334) des Schlauchanschlusses auf der Schlauchanschluss-Auflagefläche (320) des Ventilkörpers aufliegt und das Ventilkörperverbindungsrohr (330) des Schlauchanschlusses in dem Schlauchanschluss-Aufnahmeloch (310) des Ventilkörpers aufgenommen wird.

13. Patronenbetriebener Feuerlöscher nach Anspruch 12, wobei der Zylinder eine Befestigungsschraube (214) umfasst, und wobei die Befestigungsschraube durch den Schlauchanschluss (106) und den Ventilkörper (104) verläuft.

14. Verfahren zum Zusammenbau des patronenbetriebenen Feuerlöschers (100) nach Anspruch 12 oder 13, wobei das Verfahren Folgendes umfasst:
Montieren des Ventilkörpers (104) an dem Zylinder (102);
Verbinden des Schlauchanschlusses (106) mit dem Ventilkörper durch Drücken des Ventilkörperverbindungsrohrs (330) in das Schlauchanschluss-Aufnahmeloch (310), so dass die Befestigungsplatte (334) des Schlauchanschlusses auf der Schlauchanschluss-Auflagefläche (320) des Ventilkörpers aufliegt; und
Befestigen des Ventilkörpers (104) und des Schlauchanschlusses (106) an dem Zylinder (102).

15. Verfahren nach Anspruch 14, wobei der Ventilkörper (104) und der Schlauchanschluss (106) mit einer oder mehreren Muttern (350) an dem Zylinder befestigt sind.

## Revendications

1. Connecteur de tuyau (106) pour un extincteur d'incendie (100) actionné par cartouche, le connecteur de tuyau comprenant :
un tube de raccordement (330) de corps de vanne pour relier le connecteur de tuyau à un corps de vanne de l'extincteur d'incendie, dans lequel le tube de raccordement au corps de vanne n'est pas fileté ;
un tube de raccordement (332) de tuyau pour relier un tuyau au connecteur de tuyau ; et
une plaque de fixation (334) pour fixer le connecteur de tuyau au corps de vanne de l'extincteur d'incendie.

2. Connecteur de tuyau selon la revendication 1, dans lequel le connecteur de tuyau (106) est constitué de matière plastique.

3. Connecteur de tuyau selon la revendication 1 ou la revendication 2, dans lequel la plaque de fixation (334) comprend une ouverture (340).

4. Connecteur de tuyau selon la revendication 3, dans lequel l'ouverture (340) n'est pas filetée.

5. Connecteur de tuyau selon une quelconque revendication précédente, dans lequel le tube de raccordement (332) de tuyau s'étend à partir d'un premier côté (336) de la plaque de fixation (334) et dans lequel le tube de raccordement (330) de corps de vanne s'étend à partir d'un second côté (338) de la plaque de fixation, dans lequel le second côté est opposé au premier côté.

6. Connecteur de tuyau selon la revendication 5, dans lequel la plaque de fixation (334) comprend un plan de plaque de fixation, dans lequel le tube de raccordement (332) de tuyau s'étend dans une première direction perpendiculaire au plan de plaque de fixation, et dans lequel le tube de raccordement (330) de corps de vanne s'étend dans une seconde direction perpendiculaire au plan de plaque de fixation, dans lequel la seconde direction est opposée à la première direction.

7. Connecteur de tuyau selon une quelconque revendication précédente, dans lequel une ouverture (342) s'étend à travers le tube de raccordement (330) de corps de vanne, la plaque de fixation (334) et le tube de raccordement (332) de tuyau.

8. Connecteur de tuyau selon une quelconque revendication précédente, dans lequel la plaque de fixation (334) comprend une ou plusieurs nervures de renfort (346).

9. Corps de vanne (104) pour un extincteur d'incendie (100) actionné par cartouche, le corps de vanne comprenant :
une surface de support (320) de connecteur de tuyau pour supporter une plaque de fixation d'un connecteur de tuyau selon l'une quelconque des revendications 1 à 8 ; et
un trou de réception (310) de connecteur de tuyau non fileté à l'intérieur de la surface de support (320) de connecteur de tuyau pour recevoir un tube de raccordement au corps de vanne du connecteur de tuyau.

10. Corps de vanne selon la revendication 9, dans lequel le corps de vanne (104) est constitué de matière plastique.

11. Corps de vanne selon la revendication 9 ou la revendication 10, dans lequel la surface de support (320) de connecteur de tuyau comprend un point de fixation (304), et dans lequel le point de fixation comprend une ouverture (304a).

12. Extincteur d'incendie (100) actionné par cartouche, l'extincteur d'incendie comprenant :
le connecteur de tuyau (106) selon l'une quelconque des revendications 1 à 8,
le corps de vanne (104) selon l'une quelconque des revendications 9 à 11 ; et
un cylindre (102) avec une ouverture (200) au sommet du cylindre,
dans lequel le corps de vanne est fixé au cylindre pour sceller l'ouverture au sommet, et le connecteur de tuyau est monté sur le corps de vanne de sorte que la plaque de fixation (334) du connecteur de tuyau est supportée sur la surface de support (320) de connecteur de tuyau du corps de vanne et le tube de raccordement (330) de corps de vanne du connecteur de tuyau est reçu dans le trou de réception (310) de connecteur de tuyau du corps de vanne.

13. Extincteur d'incendie actionné par cartouche selon la revendication 12, dans lequel le cylindre comprend un boulon de fixation (214), et dans lequel le boulon de fixation passe à travers le connecteur de tuyau (106) et le corps de vanne (104).

14. Procédé d'assemblage de l'extincteur d'incendie (100) actionné par cartouche selon la revendication 12 ou la revendication 13, le procédé comprenant :
le montage du corps de vanne (104) sur le cylindre (102) ;
le raccordement du connecteur de tuyau (106) au corps de vanne en poussant le tube de raccordement (330) de corps de vanne dans le trou de réception (310) de connecteur de tuyau de sorte que la plaque de fixation (334) du connecteur de tuyau est supportée sur la surface de support (320) de connecteur de tuyau du corps de vanne ; et
la fixation du corps de vanne (104) et du connecteur de tuyau (106) au cylindre (102).

15. Procédé selon la revendication 14, dans lequel le corps de vanne (104) et le connecteur de tuyau (106) sont fixés au cylindre par un ou plusieurs écrous (350).
